(19)

**Europäisches Patentamt**
**European Patent Office**
**Office européen des brevets**

(11) **EP 1 915 247 B1**

(12) **EUROPEAN PATENT SPECIFICATION**

(45) Date of publication and mention
of the grant of the patent:
**07.09.2011 Bulletin 2011/36**

(51) Int Cl.:
*B29C 45/54* *(2006.01)*    *B29C 45/17* *(2006.01)*
*B29C 47/08* *(2006.01)*    *B29C 45/00* *(2006.01)*

(21) Application number: **06752833.1**

(22) Date of filing: **27.06.2006**

(86) International application number:
**PCT/CA2006/001061**

(87) International publication number:
**WO 2007/016759 (15.02.2007 Gazette 2007/07)**

(54) **PLASTICIZING UNIT SUB-ASSEMBLY**

WEICHMACHEREINHEIT-UNTERBAUGRUPPE

SOUS-ENSEMBLE D'UNITÉ DE PLASTIFICATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.08.2005 US 200392**

(43) Date of publication of application:
**30.04.2008 Bulletin 2008/18**

(73) Proprietor: **Husky Injection Molding Systems Ltd. Bolton, ON L7E 5S5 (CA)**

(72) Inventors:
• **UJMA, Andreas**
**66663 Merzig (DE)**

• **JUARISTI-TELLO, Enrique**
**L-1338 Luxembourg (LU)**

(74) Representative: **Vossius, Corinna**
**Dr. Volker Vossius**
**Patent- und Rechtsanwaltskanzlei**
**Geibelstrasse 6**
**81679 München (DE)**

(56) References cited:
WO-A-00/78523        WO-A1-2006/039781
US-A- 4 290 701      US-A- 5 281 384
US-A- 5 863 567      US-A- 6 146 575
US-A1- 2001 005 062  US-A1- 2005 017 412
US-B1- 6 241 932     US-B1- 6 649 094

**Description**

**TECHNICAL FIELD**

This invention relates a plasticizing unit sub-assembly.

## BACKGROUND OF THE INVENTION

Injection molding technology supports the production of molded parts of varying sizes, e.g. bottle preforms, car bumpers and component housings. The benefits of injection molding technology include cycle speed, consistently reproducible part quality and cost. Especially in the context of plastic injection molding, parts are relatively light when compared with cast steel or machined metal alternatives.

In relation to large-sized, lightweight molded parts or parts that require high residual strength, injection molding platforms are moving towards technologies such as:

i) *Thixomolding* in which molten magnesium is injected under very low pressure, but at very high speed, to form an injection molded metal part. Processing of molten magnesium is somewhat abrasive on the system components, especially the extruder unit, and it is also necessary for the mold to be treated with release agents to facilitate part de-molding; these are two obvious drawbacks.

ii) *Water-Injection Technology* (WIT) that operates to produce hollow plastic components. In this technology, shortly after injection and prior to plastic solidification, the molten core of the plastic part is ejected from the part into a collection reservoir using a stream of high pressure water. Depending on part shape, this technology can unfortunately produce non-uniform wall thicknesses in the finished article, since the flow and action of pressurized water cannot be deterministically controlled. Some of the physical bulk of the molded part is thus removed, but this also potentially reduces the inherent physical strength of the molded part.

iii) *Gas-assisted injection technology* employs a similar concept to WIT, albeit that the phase of the evacuating component is different.

iv) *In-line compounding* (particularly in the sense of two-stage injection units).

Single stage, reciprocating screw (RS) plasticizing units have, in the past, been used to process: i) "pultruded pellets"; and ii) pre-compounded fibres set into a thermoplastic resin pellet. In an RS extruder, the reciprocating screw is drawn or forced backwards along the barrel during the plasticizing cycle to permit melt to be accumulated in front of a tip of the screw. Pultruded pellets contain strands of fibres that are initially about ~10 millimetres (mm) to ~12mm in length, whereas the pre-compounded fibres are significantly shorter (typically ~1mm to ~2mm). The inevitable shearing action of the RS extruder leads to a significant shortening of these fibres to the extent that a finally molded part includes fibres that are typically less than about ~3mm to 5mm in length (from the pultruded pellets) and generally less than ~1mm (for pre-compounded fibres). Additionally, the abrasive nature of these fibres causes barrel wear issues which must be addressed either through regular maintenance of the machine or the provisioning of: appropriate barrel liners and/or screw geometries.

In-line compounding is a two-stage technology that generally commences with a spooled line of fibres, typically glass-fibres (or the like), that are drawn into a two-stage extruder unit by operation of a twin-screw extruder (TSE). Within the barrel, the flights and configuration of the TSE initially operate to cut each line of fibres into short lengths in the range of about 15mm to 50mm, with the process of melt passage (in the extruder and the associated channeling to the mold) then further reducing the length of these already shortened fibres through the actions of shear forces. In general, in glass-fibre type compounding, it will be understood that a certain length of the TSE is used to compound the glass-fibre into the polymer matrix, and that the screws include typically two sets of cutting elements, namely one near a feed-throat for the glass-fibre and one close to a tip of the extruder. Pre-chopped fibres could, however, be used to replace the requirements of a spool-fed line. In in-line compounding, the objective is a final average fibre length of at least ~10mm, although the longer the better.

Twin screw extruder technology is favoured, but not essential, to in-line compounding because it generally and advantageously provides a less harsh treatment of the chopped fibres. Beneficially, the kneading actions of TSEs ensure that the melt is homogenized and that particles (e.g. fibres or other additives) are evenly distributed.

It will be further appreciated that, while heaters that are positioned along the length of the extruder (be it an RS unit or a TSE), these heaters contribute relatively little to the process of plasticizing. The predominant process by which plastic pellets are melted is frictional heating brought about by shear forces caused by macroscopic phenomenon arising between plastic molecules and pellets. The shearing rate within the flow is determined by, amongst other things, the melt front velocity across the available width of the channel. More particularly, the velocity of the flow is at a maximum at the centre of the channel and a minimum at the edges. Higher velocities and small channel diameters generate the

**EP 1 915 247 B1**

greatest shear. Additionally, longer flow paths cause longer residence time in the channel, with the longer residence time meaning that the plastic melt is subjected to undesirable shear forces for a longer period.

In both the RS and TSE environments, from a perspective of an overall machine configuration and operation of an in-line compounding machine, it will be understood that, following production of a homogenized plastic melt by the extruder (irrespective of whether the process is continuous or discontinuous), plastic melt is injected into a mold that is clamped between a stationary platen and a moving platen. The mold is, in fact, usually accessed via a suitable distribution manifold (such as a hot runner) that is coupled to the injection unit through a series connection of sprue bushing (that interfaces between the distribution manifold) and a tip of a nozzle adaptor that provide a flow passage for a melt collection chamber, e.g. the shooting pot.

More particularly, in a two-stage environment, a barrel head of the TSE is coupled to a distributor valve via a melt transfer channel (in the form of a generally straight pipe between the extruder barrel head and a typically 3-way valve). More specifically, with a three-way valve configuration, plastic melt (under pressure flow conditions) flows through the transfer channel (from the TSE) into a shooting pot that accumulates a shot of plastic for subsequent injection into the mold during a molding cycle. As homogenized melt is accumulated, a piston of the shooting pot is controllably moved backwards to increase the volume of the shooting pot, thus allowing the shooting pot to store more melt over time. Once a full shot of plastic has been accumulated in the shooting pot, the three-way valve is re-configured to couple the shooting pot to the manifold through the nozzle adaptor that conventionally interfaces to a sprue on the manifold. Consequently, the TSE generally operates in a discontinuous mode (where plasticizing operation is periodically restricted) since the TSE is periodically isolated from any form of collection vessel and continuous plasticization would present logistical storage problems for the system, since the screws in a TSE do not reciprocate to create a reservoir downstream of them in the barrel.

Prior art in-line compounding machine design adopts an in-line configuration for the injection piston to the barrel sub-assemblies. An injection nozzle (tip) on the barrel interfaces into a sprue bushing abutting into a hot half of a mold. The spruce bushing is accessed via a generally centrally positioned hole in a front surface of a stationary platen of the injection molding machine, with the hole minimized in size to ensure overall platen stability and strength. The barrel head, in general, also enters into an inner region of the platen through a suitably sized barrel hole.

In terms of the TSE in a two-stage injection unit, this is mounted directly above the barrel assembly, with the transfer channel providing a pressure flow of homogenized melt to the three-way distributor valve that couples the TSE to the shooting pot. Mounting of the TSE above the barrel has the effect of limiting an overall footprint of the injection molding machine. Moreover, for two-stage injection machines operating with a shooting pot, the on-top and in-line configuration is the accepted norm since it facilitates outward swinging of the injection unit to permit access to and removal of the screw(s) from the barrel.

Since in-line compounding is generally associated with large parts that require large quantities of injected plastic each shot, in-line compounding machines typically have a machine size capable of generating at least 1250 metric tons of clamp force and typical something in excess of 2000 tons of clamp force. These relatively large tonnage machines consequently have large injection units with large injection pistons and large screw diameters. Transfer channel lengths are therefore necessarily in the range of ~0.80 to 1.00 metres or longer. Similarly, the physical size of platen needed in large tonnage systems means that the nozzle adaptor length can be - 0.5m or greater.

In terms of overall machine structure, a machine housing provides a framework into which to locate the necessary power and control units, as well as oil reservoirs and pumps (as will be readily appreciated by the skilled addressee). Carriage cylinders are coupled between the stationary platen and a longitudinally moveable sledge (or base plate) that is slidably mounted relative to the machine housing by carriage rails. The shooting pot and barrel sub-assemblies are mounted on the moveable sledge. Thus, actuation of the carriage cylinders causes longitudinal movement of the sledge that results in retraction of the barrel from the sprue bushing and stationary platen.

In a two-stage system, finally, to effect injection of melt under high pressures into the mold, the machine platens and the mold are clamped together under applied tonnage and then the injection piston is forced forward to empty the shooting pot. Alternatively, in a single stage unit, following clamp up and the full recoiling of the reciprocating screw, co-operation between a check valve (preventing backwards flow of melt over the flights) and a forward driven motion of the reciprocating screw forces the shot of melt into the mold. The check valve is otherwise known as a non-return valve.

In both the single stage and two-stage injection unit environments, the nozzle adaptor, therefore, also induces a shearing effect into the melt. A resultant velocity flow through the nozzle adaptor is, in fact, very much greater than any pressure flow originating from the plasticizing action of the extruder (either an RS or TSE), and additional fibre shortening therefore occurs as a function of the channel length and induced shearing exposure resulting from increased melt residence time.

Finally, in relation to platen design in injection molding machines, platen deflection is a considerable and perennial concern. To minimize platen deflection across front and rear surfaces of the platen, the prior art has adopted either structurally massive box-section platens or Reflex® platen designs, both of which are described in European patent EP-B-0747196.

Bcx-section platens generally suffer from issues of weight, cost and bending. Such massive steel structures limit the operational speed of the machine and increases manufacturing costs (both in terms of the cast material and in associated equipment costs). In having to move increasingly more massive loads at high speeds, increasingly more powerful and more robust equipment must be provided.

Reflex® platens have an intermediate section between the front and rear walls of the platen, which intermediate section acts on the principles of a bridge (since it is generally arch-shaped and hence concentrates force into a central region of a mold supporting front wall). When compared with other platen designs, the Reflex® platen inherently provides lower deflection in a mounting surface of the platen, since the intermediate support structure is selectively allowed to flex and compress (under applied clamp tonnage) while keeping the mold-mounting face flat.

All platens for injection molding machines have a generally symmetrical central hole through which the injection nozzle, nozzle adaptor and/or barrel partially protrude or reside. The aforementioned US 3,169,275 and EP-B-0747196 patents both show exemplary forms of platens that exhibit this design feature. The size of any hole in the front and rear surfaces of a platen (or, in the case of a Reflex® platen, the front and rear walls of the platen) is limited to ensure that the physical properties of the platen are not compromised. Otherwise, significant and relatively high deformation in the platen can occur, especially across rear surfaces of the platen which see the greatest potential deflection. Bending and deformation are undesirable because they induce additional stresses into tie bars of the machine (as a consequence that bending across the rear face/wall alters the alignment and geometry of tie-bar bores through which tie bars extend). Additionally, bending and deformation more usually cause mold flash (where melt leaks from the mold at the parting line) that produces short-weight parts, effects part quality and/or promotes premature wear of components.

Bending and overall deformation in platens is therefore a major concern (in large scale applications, such as in-line compounding technologies), which bending is exacerbated under large applied clamp tonnages and large scale platens.

While not showing an in-line compounding machine, US patent 3,169,275 (assigned to the Farrel Corporation by Compton *et al*) shows a typical configuration of a screw-type preplasticizing plastic injection molding machine. In this prior art design, an injection cylinder is in-line with an injection plunger that is coupled to an injection nozzle via a long, narrow passageway. Shut-off of melt flow is controlled by a valve located at the end of the passageway and proximate to the nozzle. The passageway acts as a melt accumulation volume and further cooperates with the injection plunger. The valve is actuated by a motor and piston located directly below, but inclined to, the passageway (as shown in FIG. 2 of US 3, 169, 275). In accordance with conventional design, a gear box mounted on top of the screw controls the operation of the screw. The position of the gear box, as will be appreciated, is determined by the in-line nature of gear box and also the limited space within the frame necessary to support the extruder unit, since the majority of available space is consumed by the oil reservoir, pumps, motors and hydraulic systems necessary for machine operation. Should the design advocated in US patent 3,169,275 be used in an in-line compounding environment, velocity flow through the passageway would considerably shorten overall fibre length as a consequence of increased residence time and hence increased exposure to shear effects.

EP-B-0538286 (Putsch) describes an in-line compounding system that operates in a continuous fashion. Homogenized melt is buffered in a temperature-controlled buffer store before being introduced into an injection plunger unit. EP-B-0538286 further discusses the use of differing types of additives and fibres to produce a variety of plastic parts having different properties and uses.

US patent application 2001/0005062 (Klaus and Steffens) teaches a two stage injection molding machine where the plastication unit 18 and the melt accumulator 20 are mounted on a common elongated base 16. The plastication unit 18 is mounted to base 16 at an acute angle relative to the melt accumulator 20. A conduit 42 interconnects plastication unit 18 and melt accumulator 20. Conduit 42 includes a check valve 46 to prevent backflow of material from accumulator 20 into plastication unit 18 during injection. US-A-2001/0048181 discloses a plasticizing unit sub-assembly, according to the preamble of claim 1.

In very large scale but conventional injection molding machine (of 5400 tons) having a two-stage unit, it is known to provide a large symmetrical central hole in the rear face of the stationary platen to accommodate the barrel and to permit closer location of a nozzle tip to the mold.

In summary, in a compounding system, to ensure molded part strength, besides having to ensure that the fibres are evenly distributed throughout the plastic melt and hence within the final molded part, it is important that the fibres remain relatively long (since this intrinsically provides bonding strength). Equally, it is desirable that there is a narrow glass fibre length distribution from an average fibre length; this provides uniformity in the bulk properties of the molded part.

## SUMMARY OF THE INVENTION

According to the present invention there is provided a plasticizing unit sub-assembly in accordance with claim 1.

Advantageously, the relative lateral displacement of the shooting pot and extruder reduces an overall length of a connecting transfer channel. With this length reduction, exposure times to shear forces within the system (as a whole) are reduced with the result that there is an increase in average fibre length in a mold part. invention contribute to molded, lightweight parts acquiring increased strength from increased average fibre length. Moreover, the preferred embodiments have the desirable consequence of concentrating a distribution of fibre lengths into a narrower band of desired lengths.

## BRIEF DESCRIPTION OF THE DRAWINGS

Exemplary embodiments will now be described with reference to the accompanying drawings in which:

FIG. 1 is a graphical representation of flow velocities and related shear rates in a typical channel;
FIG. 2 is a perspective view of an injection unit assembly according to a preferred embodiment of the present invention;
FIG. 3 is a partial view of a twin screw extruder of FIG. 3 (omitting a shooting pot), but showing the extruder *in situ* within a stationary platen;
FIG. 4 is a detailed perspective view of the embodiments of FIGs. 2 and 3 shown in situ within a machine environment;
FIG. 5 is a sectional view through a platen of FIG. 4, the platen being not in accordance with the present invention;
FIG. 6 is an end view of a mold-mounting face of the platen of FIG. 5;
FIG. 7 is a sectional view through the platen of FIG. 6, taken vertically along a centre line A-A of FIG. 6; and
FIG. 8 is a graph showing comparative fibre length distributions in in-line compounding machines of the prior art and the present invention.

## DETAILED DESCRIPTION OF THE PREFERRED EMBODIMENT (S)

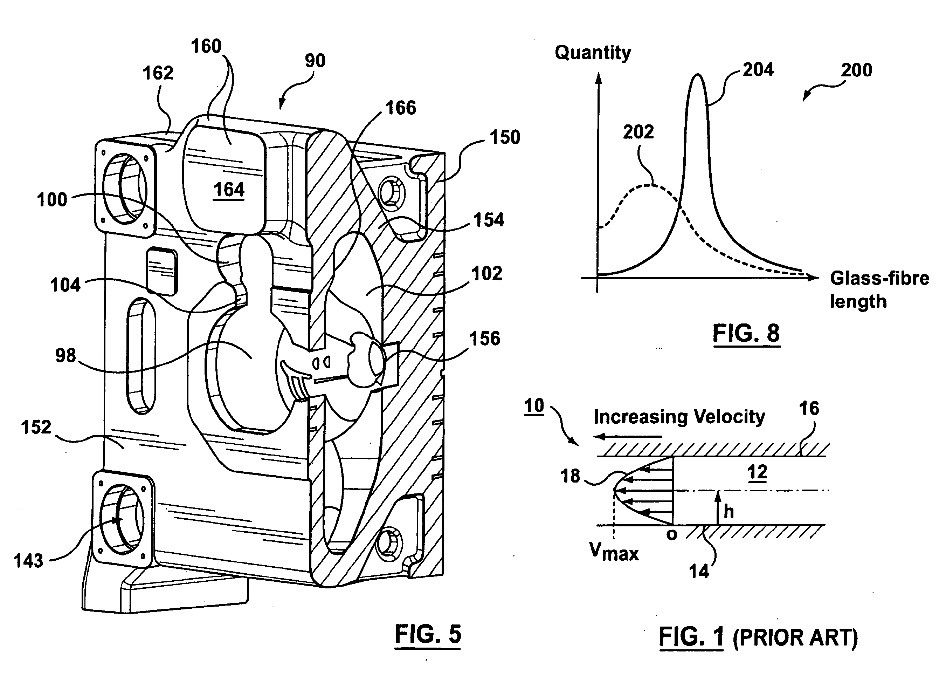

Referring to FIG. 1, there is shown a graphical representation 10 of flow velocities and related shear rates in a typical channel 12. A velocity ($V_{max}$) at a centre of the channel 12 is at a maximum, whereas velocities at sides 14, 16 are minimum. A resultant profile of a curve 18 of flow velocities in a channel therefore follows a generally symmetrical and parabolic form, with angles to tangents at each point on the curve providing a shear rate, y, that can (for Newtonian fluids) be simplistically represented as:

$$\gamma \quad = \quad \frac{velocity,\ v}{channel\ height,\ h}$$

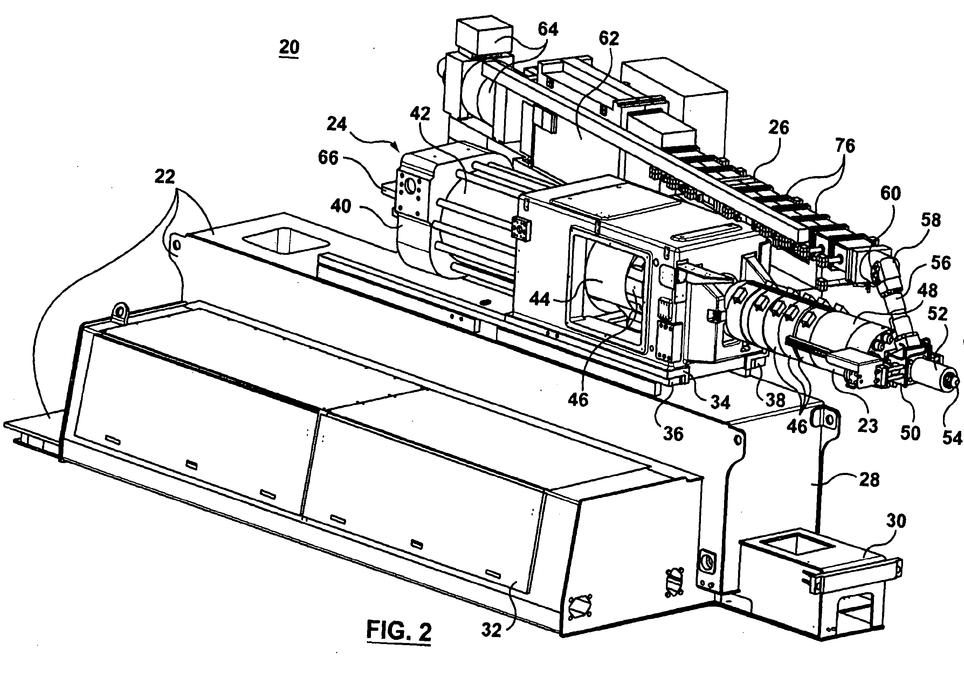

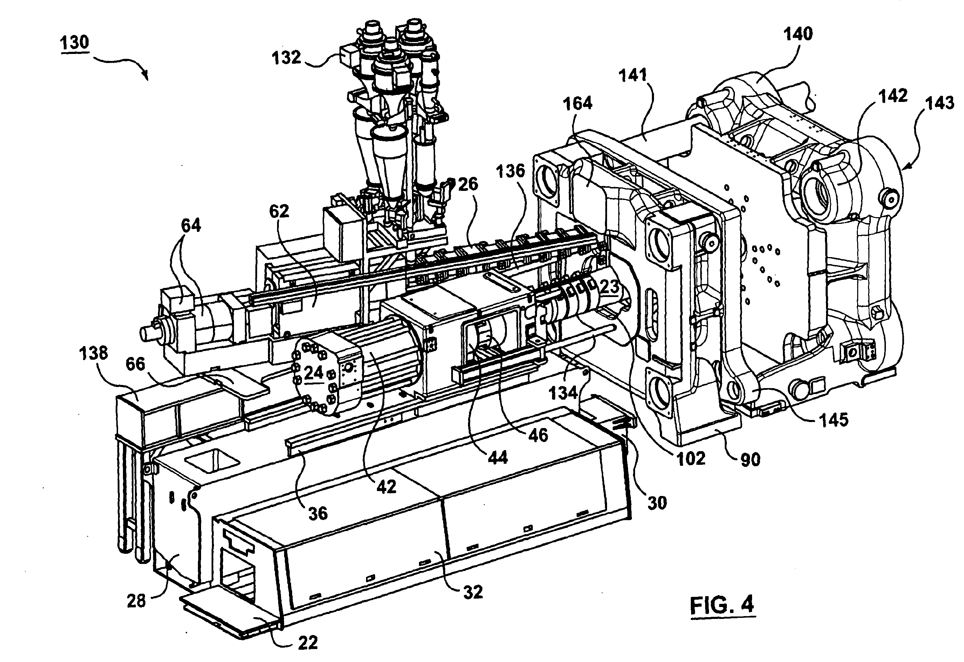

FIG. 2 is a perspective view of a two-stage injection unit assembly 20 according to a preferred embodiment of the present invention. The injection unit sub-assembly 20 is for an in-line compounding machine, the significant features of which are shown in FIG. 4). Conventionally, a machine base assembly 22 includes a solid frame that supports both a shooting pot sub-assembly 24 (realized by an injection unit and barrel) as well as a twin screw extruder (26). The frame generally also acts as a housing for an oil reservoir 28 typically located beneath the injection piston 44. The machine base assembly is shown in partial view, since additional portions of the base (that support a clamp unit of the machine) are omitted. However, for exemplary reasons, a clamp base interface 30 is also shown at a foot of the frame (i.e. the machine base assembly 22) and at a position substantially below the shooting pot.

The machine base assembly 22 includes a power and hydraulic cabinet 32 that incorporates motors and pumps for use by the system, as will readily be understood by the skilled addressee. The power and hydraulic cabinet 32 is typically parallel to and adjacent the shooting pot sub-assembly 24.

Related and necessary power feeds and hydraulic lines have been omitted from the drawings for the sake of clarity. Similarly, electrical control units are not shown, since these are unnecessary for an understanding of the present invention.

In terms of the shooting pot sub-assembly 24, this is mounted on an injection unit carriage 34 mounted to run longitudinally on carriage rails 36, 38 coupled on the frame of the machine base assembly 22. Typically, the carriage rails 36, 38 are located above the oil reservoir 28. As will be understood, the shooting pot sub-assembly 24 comprises a chain of serially coupled components, including the injection manifold 40, the hydraulic cylinder 42 and the piston 44 (that acts on a plunger 46 inserted into a rear end of the shooting pot cylinder). In terms of the shooting pot cylinder, heater bands 46 surround an exterior surface of shooting pot cylinder 23 (which is usually boxed in by a protective cover). The shooting pot accumulates melt at a position rearward of a multi-way distributor valve 50. As previously indicated, the distributor valve 50, typically a three-way valve, provides a channel interface between the shooting pot and selectively one of either a nozzle adaptor 52 (coupled to an injection nozzle 54) and a transfer channel 56 that couples to the twin screw extruder 26. The operation of the distributor valve 50 is choreographed by a machine controller and is usually achieved through either hydraulic or electrical control.

As will be understood, coupling of the transfer channel 56 to a barrel head of the twin screw extruder 26 is achieved through a coupling head 58. Positive engagement of these components must ensure an effective seal, as will be understood, with the coupling typically achieved by bolts 60 or the like.

To this described point, the preferred embodiment of the present invention is structurally typical of a prior art two-stage unit. However, unlike the prior art in which the twin screw extruder 26 is located on top of the shooting pot sub-assembly 24, the extruder 26 is laterally offset relative to the shooting pot sub-assembly 24. In a preferred embodiment, the lateral offset produces an acute angle between the extruder 26 and the shooting pot cylinder 23, although any appropriate physical offset/reposition is potentially acceptable. Since a gear box 62 and motor drive unit 64 (for the extruder 26) are generally located in-line and behind a main body of the extruder 26, the machine configuration of the preferred embodiment of the present invention reduces the length of the transfer channel 56 by something in the region of between ~50% to 60%. The reduction of the transfer channel length has a significant impart on fibre length by reducing residence time/shear time and maintaining longer fibres that have an average length that is ~10mm (and generally ~12mm) or better. In other words, the configuration of the preferred embodiment of the present invention allows the gear-box 62 and motor drive unit 64 to be lowered and positioned beside the injection unit 24, thus reducing the length of the transfer channel by approximately half the depth of the gear box 62 or motor drive unit 64 (whichever is the greater).

In a preferred embodiment, the width of a channel in the transfer channel 56 is wider than in standard machine configurations and is at least about ~30mm in diameter and more preferably significantly larger (up to about ~70mm+). It has been found that pressure flow in such a wide but relatively short transfer channel 56 reduces the likelihood of fibre (or other additive constituent) shortening in a compounding environment.

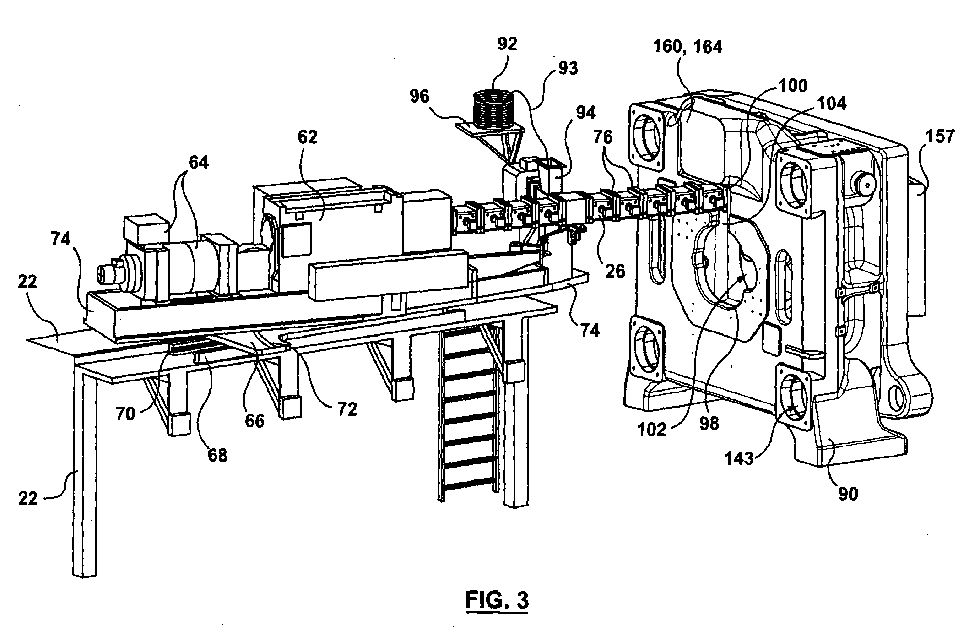

Furthermore, in the preferred embodiment, the extruder 26 is mounted to a base platform 66 that is connectable to the injection unit carriage 34. As necessary, additional sets of support rails (reference numerals 68, 70 in FIG. 3) may be coupled to the frame 22 to support the base platform 66 and permit longitudinal movement of the base platform. Consequently, backwards or forwards movement of the injection unit carriage 34 causes corresponding movement of the extruder 26. Of course, for maintenance reasons, the base platform 66 and the injection unit carriage 34 may be connected together such that they are selectively, independently separable.

In terms of servicing of the extruder 26 and particularly access to the screws contained within its barrel, the extruder 26 can be disconnected from the coupling head 58 at the top of the transfer chamber 56. Once disconnected, the extruder 26 can be lifted, swung or swiveled away from the shooting pot sub-assembly 24, thus allowing front-access to the extruder. Lifting or swiveling of the extruder 26 can be achieved with the use of an overhead crane, or preferably through the use of a lockable turntable integrally supported within the base platform 66. For example, arcuate runners can be supplied in the base platform 66, which arcuate runners interact with corresponding grooves (denoted as reference numeral 72 in FIG. 3) in the underside of an extruder carriage (reference numeral 74 in FIG. 3) of the extruder 26. Of course, in general operation, the extruder 26 is fixedly attached, e.g. bolted, to the base platform 66 (and hence physically adjoined to the frame of the machine base assembly 22 of the machine) to inhibit movement and reduce undesirable vibration.

The design of a suitable turntable is well within the remit of the skilled addressee and, since many alternative connection and actuation mechanisms are possible, FIG. 3 therefore provides only a schematic but exemplary representation of the swivel function.

In FIG. 2, the extruder 26 is also shown with external heater bands 76.

While a preferred embodiment of the present invention laterally displaces the twin screw extruder (TSE) 26 relative to a centre line of the injection molding machine and particularly a shooting pot sub-assembly 24 thereof, other configuration are also contemplated. According to the invention in an attempt to reduce the length of the transfer channel 56, the base platform 66 (on which the TSE is mounted) is also inclined relative to a horizontal plane through the machine, with the sloping inclination addressing clearance conflicts arising with respect to the extruder carriage assembly of the extruder 74 and the machine base assembly 22.

Another embodiment may laterally displace the shooting pot sub-assembly 24 relative the principal direction of applied clamp force within the injection molding machine. In other words, the extruder would be in-line with the principal direction of applied clamp force in the machine. Of course, both units could also be angled acutely relative to the principal direction of clamp force applied within the injection molding machine, although this could require additional structural supports (in the machine base assembly) for both of the shooting pot sub-assembly 24 and the extruder 26. Additionally, this latter approach would introduce a kink in the flow path of the melt into the mold, which kink could affect plastic processing by producing a non-uniform flow path.

Another alternative embodiment contemplates that, rather than having a top-fed distributor valve 50, the distributor valve is side-mounted such that the pressure flow from the TSE 26 enters from the side. In this way, the TSE 26 may be lowered relative to the barrel to reduce still further the length of the transfer channel 56. Side mounting of either the TSE 26 or the shooting pot sub-assembly 24 would likely necessitate a revision in the design of the frame (of the machine base assembly 22) to support such outboard mounting; this does, however, increase the overall size of the machine footprint and is considered less desirable.

In an extreme, with lateral displacement, the angle of one unit to the other could approach ninety degrees (subject only to the angle required to achieve component clearance), although this would considerably increase the footprint but would substantially eliminate the overall length of the transfer channel.

Referring briefly to FIG. 3, there is shown a partial view of the twin screw extruder of FIG. 3 (omitting a shooting pot, but showing the extruder 26 *in situ* within a stationary platen 90). Additionally, a feed spool (or feed hopper) 92 for continuous or chopped glass fibres or the like is shown. The feed spool (or feed hopper) 92 is located at an appropriately selected location along the length of the extruder 26, with the feed spool exemplarily shown as providing a continuous fibre strand 93 into the extruder 26 through a feed throat 94. The feed throat 94 is coupled on top of the extruder 26 and it provides direct access to both an interior channel and the screws within the extruder 26. Generally, the feed spool (or feed hopper) for compounding material is mounted to the extruder carriage 74 of the extruder 26 through the use of a suitable support frame 96.

In FIG. 3, the tip-end of the twin screw extruder 26 is angled through a rear-side of the stationary platen 90; this represents another embodiment that can, if desired, be actioned independently of relative lateral and angled displacement of the extruder and barrel. As shown in FIG. 3, the extruder is essentially on a horizontal plane above a longitudinal centre line through the platen. In relation to the platen and its centrally formed (and generally circular) barrel opening 98, to permit independent shortening of the length of the nozzle adaptor 52, an additional cut-out 100 is formed in the rear face of the platen to permit the tip-end of the extruder 26 to reside within a hollow central cone region 102 internal to the platen 90. Preferably, the size and configuration of the cut-out 100 is shaped and sized to reflect the geometry of the tip end of the extruder, e.g. rectangular but with rounded-corners. Furthermore, to permit access of the conjoined extruder 26, transfer channel 56, distributor valve 50 and shooting pot cylinder, the cut-out 100 is intersected by a linking channel 104 that provides a continuous gap with the barrel opening 98. The linking channel 104 is preferably substantially centrally located and runs substantially vertically upwards from the centre of the barrel opening 98, thus allowing entry of the transfer channel 56. The barrel opening 98 is therefore conventional in design, other than it is intersected by the linking channel 104.

Of course, an alternative is simply to enlarge the barrel opening 98, but this generally compromises the strength of the stationary platen 90. Consequently, it is preferably that access points for the shooting pot cylinder, extruder 26 and transfer channel are kept to a minimum, with this resulting in an opening in the rear surface of the stationary platen that may be asymmetrical, i.e. non-uniform in circumferential outline (as especially evident in FIGs. 3 and 5).

By modifying the basic entry point for the shooting pot cylinder 23 and extruder 26, the length of the nozzle adaptor 52 can be reduced (from conventional design) by approximately ~50%, thus reducing the channel length of the nozzle adaptor to ~30cm or smaller. By reducing the nozzle adaptor length, decreased melt residence time/shear time occurs within the machine system of this embodiment, resulting in increased average fibre length (compared with prior art compounding machines) and a more concentrated fibre length distribution.

In other words, the platen entry system that permits the shooting pot cylinder, extruder and transfer channel to reside within the structure of the platen, permits the shortening of the nozzle adaptor 52 and thus results in longer average fibre lengths in a compounder environment. Putting this another way, compared with the prior art, there is now reduced melt residence time/shear time resulting from the shortened nozzle adaptor 52 and, as such, the in-platen housing of the transfer channel can find application in both compounding systems and other molding systems that operate with property-sensitive resins that could benefit from less shear.

Referring briefly to the graph 200 of FIG. 8, a typical prior art fibre length distribution is illustrated in dotted outline (reference numeral 202) and shows that there is a predominance to produce larger numbers of short length fibres and a general lack of significant numbers of longer length fibres; this results in a skewed distribution. In contrast, in following either or both of the shortened transfer channel and shortened nozzle adaptor regimes (as taught herein), the average fibre length is increased and there is a more noticeable bell-shaped distribution representing an increased average fibre length (represented by the solid curve 204). In other words, a larger percentage of fibres are within a statistical variance of the modal fibre length. Of course, better results are obtained by a combination of both shortened transfer channel and shortened nozzle adaptor regimes.

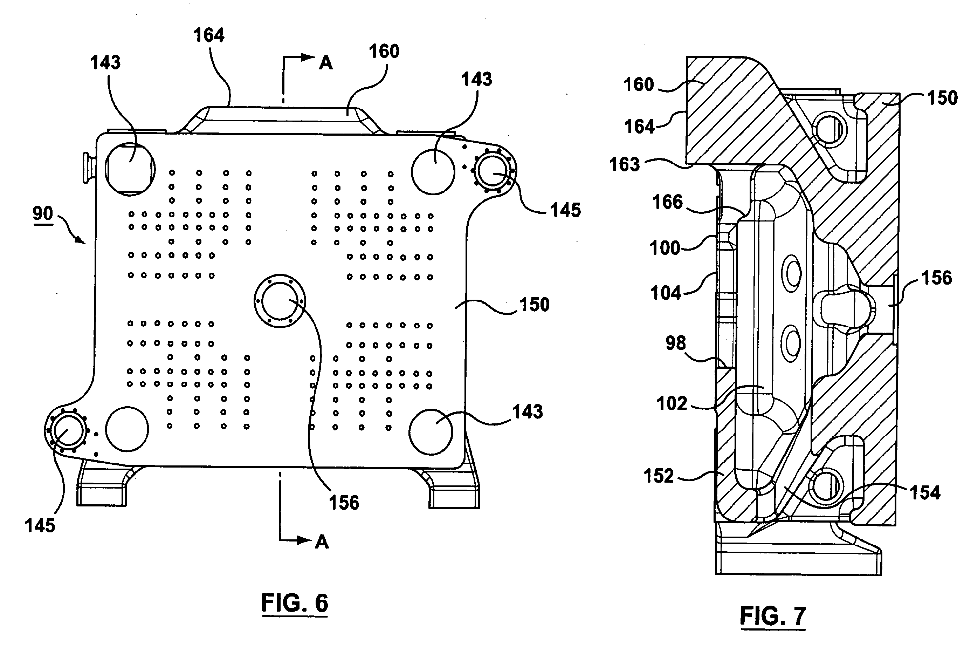

In modifying the rear entry point of the platen of FIG. 3, strengthening of the platen is also required; this will be described subsequently in relation to FIGs. 6 and 7.

FIG. 4 is a detailed perspective view of the embodiments of FIGs. 2 and 3 shown *in situ* within an environment of a molding machine 130. In this instance, the compounding feed spool (or feed hopper) 92 has been omitted because the general configuration of the machine 130 is applicable to both an in-line compounding machine and a conventional injection molding machine in which it is desired to reduce the length of the nozzle adaptor 52.

To complete an overall picture of the (in-line compounding) molding machine, FIG. 4 shows a plastic pellet feed hopper 132 that regulates the supply of pellets into the extruder for melting and homogenization. Carriage cylinders 134 and 136 are coupled to the stationary platen 90 and the injection piston assembly. The carriage cylinders, when extended, thus cause the movement of the entire shooting pot assembly 24, injection piston 44 and twin screw extruder 26. Typically, electrical circuitry and wiring for system control is housed in electrical cabinets 138 juxtaposed the oil reservoir 28 and beneath the (preferably) acutely-angled twin screw extruder 26. In this way, the footprint (arising from an overall width of the injection molding machine) is minimized, since the electrical cabinets can be accommodated within a frame 22 that is conventional in overall size.

In addition to the stationary platen, a moving platen 140 is also shown. The moving platen 140 is coupled to the stationary platen through a combination of tie bars 141 and clamp piston assemblies 142 that surround tie-bar bores 143 located in the each corner of the machine 130. Development of clamp force can, of course, be produced by various mechanisms, so the two-platen design of FIG. 4 is simply exemplary of the general concept. In other words, the principles of the various independent and complementary embodiments of the present invention can be employed to toggle machines, as will be readily appreciated. Also, for the sake of completeness, the platen 90 is shown to include support structure 145 having bores to accommodate stroke cylinders (not shown) that control the opening and closing of the platens (and hence the mold).

Turning now to the modified stationary platen 90 vertical sectional views through the preferred embodiment of the platen 90 are shown in FIGs. 5 and 7. The section of FIG. 5 is taken at a point slightly off centre, whereas the section in FIG. 7 is through a centre line AA of FIG. 6.

The stationary platen 90, being a Reflex® platen manufactured by Husky Injection Molding Systems Limited, includes a front wall 150, a rear wall 152 and an intermediate support structure 154 that defines the hollow central cone region 102. The cone region 102 thus permits the end of the shooting pot cylinder 23, the transfer channel 56 and the end of the extruder 26 to reside within the stationary platen 90, while a further central sprue hole 156 (in the front wall 152) is configured to surround the nozzle adaptor 52 and thus permit the nozzle 54 to interface to a sprue bushing of a mold (reference numeral 157 in FIG. 3). The sprue hole 156 is therefore entirely conventional in design.

Additional bracing and strengthening of the stationary platen 90 to counter the loss of bulk material is achieved by using a cross-member 160 positioned above the cut-out 100 and extending laterally across a top surface of the platen 90. The cross member 160 may extend above a top surface 162 of the platen, with the cross member 160 having a generally bulbous geometry that acts to thicken the platen 90 to produce an outwardly projecting step 163 near the top of the rear wall 152 (substantially corresponding to a width of the cone region 102). The projecting step 163 includes a substantially flat plateau region 164 that extends substantially across the entire width of the reinforcing cross-member. The cross member 160 is preferably further configured to thicken the rear wall 152 above the cut-out by providing an inwardly extending flange 166 across the length of the cross member 160 and preferably substantially across a width of the cone region 102. The cross-member is preferably integrally cast with the platen 90, although it could be achieved using steel or the like that is bolted into place. With the bracing provided by the increased material in the plateau region 164 and/or inwardly extending flange 166, deflection of the rear wall 152 of the stationary platen is restricted.

FIG. 6 is an end view of a molding mounting surface of the stationary platen 90. In this view, the generally symmetrical configuration of the stationary platen is shown, including the sprue hole 156.

The preferred embodiments have identified that, especially in the context of in-line compounding technology, elimination of undesirable mechanical part interference (by system reconfiguration) has a positive effect on increasing average fibre length. Consequently, molded part strength increases.

It: will be appreciated that the above description has been given by way of example only and that, as such, modifications in detail may be made within the scope of the present invention. Furthermore, acutely-angled lateral displacement of the barrel relative to the extruder (giving rise to a shortened transfer channel) can also be applied to an RS environment in combination with a temperature controlled, buffer store as taught in EP-B-0538286. Furthermore, while the preferred embodiment contemplates the lateral displacement of the TSE across the carriage/power pack/ injection piston assembly (to reduce the overall machine footprint), it is conceivable (although less desirable) to mount the TSE outside of the machine footprint).

The improved platen design and its ability to shorten the nozzle adaptor length is generally applicable to machines having platens, and can therefore find wider application beyond just in-line compounding technology.

Also, since molding machines capable of generating clamp tonnages greater than about 5000 tons are inherently more bulk, steel compensation in the rear faces of stationary platens of such massive machines is generally considered less critical than in smaller, in-line compounding machines having clamp tonnages in the approximate range of -2000 to ~3500 tons, although the present invention with smaller tonnage system (e.g. ~1200 tons). Consequently, in typical in-line compounding applications (~3000 tons), rear wall structural compensation is considerably more important in small machines, with the structural compensation (according to a preferred embodiment) realized by an extended rear wall (above a horizontal centre line) and the external flange 166 on the internal face of the rear wall.

Furthermore, while the present invention has been described in relation to the compounding processing of glass fibre strands, it will be apparent (and will be appreciated by the skilled addressee) that the same system configuration can be adapted for other compounding environments using different materials, including blends of fibres and colorants or other additives (as expounded in, for example, EP-B-0538286).

**Claims**

1. A plasticizing unit sub-assembly (20) comprising:

   an extruder (26) for producing, in use, a homogenized melt, the extruder (26) including a feed throat (94) for receiving fibers to be compounded into the melt;
   an injection unit (24) incorporating a shooting pot assembly (24); and
   a transfer channel (56) coupling the extruder (26) to the shooting pot assembly (24),
   the extruder (26) and the shooting pot assembly (24) being laterally offset with respect to each other;
   a movable carriage unit assembly (34), wherein the injection unit (24) is mounted on the carriage unit assembly (34) ;
   a movable extruder carriage (74) on which is mounted the extruder (26), wherein the extruder carriage (74) is rotatable relative to the injection unit carriage (34); and
   **characterized in that** the movable extruder carriage (74) is inclined relative to a horizontal plane.

2. The plasticizing unit sub-assembly (20) according to claim 1, further including a frame (22) on which the shooting pot assembly (24) is mounted, the frame (22) having a main axis that, in use, is aligned substantially parallel to a clamp unit, wherein the shooting pot assembly (24) is mounted in-line with the main axis.

3. The plasticizing unit sub-assembly (20) according to claim 1, wherein the transfer channel (56) has a first end coupled to the extruder (26) and a second end, the plasticizing unit sub-assembly (20) further comprises:

   a multi-position valve (50) coupled to the shooting pot assembly (24) and also to the second end of the transfer channel (56), wherein the transfer channel (56) rises substantially upwardly from the multi-position valve (50).

4. The plasticizing unit sub-assembly (20) according to claim 1, wherein the transfer channel (56) has a first end coupled to the extruder (26) and a second end, the plasticizing unit sub-assembly (20) further comprises:

   a multi-position valve (50) coupled to the shooting pot assembly (24) and the second end of the transfer channel (56), wherein the transfer channel (56) extends substantially laterally from the multi-position valve (50).

5. The plasticizing unit sub-assembly (20) according to claim 1, further including a frame (22) on which the shooting pot assembly (24) is mounted, the extruder (26) mounted on a base platform (66) coupled to the frame (22) but positioned outboard of the frame (22).

6. The plasticizing unit sub-assembly (20) according to claim 1, wherein the extruder (26) is a twin -screw extruder (26).

7. The plasticizing unit sub-assembly (20) according to claim 1, wherein the movable injection unit carriage unit (34) and the movable extruder carriage (7) are coupled together.

**Patentansprüche**

1. Weichmachereinheit-Unteranordnung (20), umfassend :

   einen Extruder (26) zur betriebsmäßigen Erzeugung einer homogenisierten Schmelze, wobei der Extruder (26) einen Zuführhals (94) zur Aufnahme von Fasern aufweist, die als Komponenten in die Schmelze einzuarbeiten, sind;
   eine Einspritzeinheit (24), die eine Einschuβtopfanordnung (24) aufweist ; und
   einen Überführkanal (56), der den Extruder (26) an die Einschußtopfanordnung (24) kuppelt, wobei
   der Extruder (26) und die Einschußtopfan-ordnung (24) seitlich gegeneinander versetzt sind;
   einen bewegbaren Einspritzeinheitwagen (34), wobei die Einspritzeinheit (24) auf dem Einspritseinheitwagen (34) montiert ist ;
   einen bewegbaren Extruderwagen (74), auf welchem der Extruder (26) montiert ist, wobei der Extruderwagen (74) relativ zu dem Einspritzeinheitwagen (34) drehbar ist ; und **dadurch gekennzeichnet ist, daß** der bewegbare Extruderwagen (74) relativ zu einer Horizontalebene geneigt ist.

2. Weichmachereinheit - Unteranordnung (20) gemäß Anspruch 1, die ferner einen Rahmen (22) aufweist, auf welchem die Einschußtopfanordnung (24) montiert ist, wobei der Rahmen (22) eine Hauptachse hat, die im Betrieb im wesentlichen parallel zu einer Klemmeinheit ausgerichtet ist, wobei die Einschußtopfanordnung (24) mit der Hauptachse fluchtet.

3. Weichmachereinheit-Unteranordnung (20) gemäß Anspruch 1, bei welcher der Überführkanal (56) ein erstes Ende hat, das mit dem Extruder (26) gekuppelt ist, und ein zweites Ende, wobei die Weichmachereinheit-Unteranordnung (20) ferner umfaßt:

ein Mehrpositionsventil (50), das mit der Einschußtopfanordnung (24) und auch mit dem zweiten Ende des Überführkanals (56) gekuppelt ist, wobei der Überführkanal (56) im wesentlichen von dem Mehrpositionsventil (50) hochsteigt.

4. Weichmachereinheit-Unteranordnung (20) gemäß Anspruch 1, bei welcher der Überführkanal (56) ein erstes Ende hat, das mit dem Extruder (26) gekuppelt ist, und ein zweites Ende, wobei die Weichmachereinheit-Unteranordnung (20) ferner umfaßt :

ein Mehrpositionsventil (50), das mit der Einschußtopfanordnung (24) und mit dem zweiten Ende des Überführkanals (56) gekuppelt ist, wobei sich der Überführkanal (56) im wesentlichen seitlich von dem Mehrpositions ventil (50) weg erstreckt.

5. Weichmachereinheit-Unteranordnung (20) gemäß Anspruch 1, die ferner einen Rahmen (22) aufweiset, auf welchem die Einschußtopfanordnung (24) montiert ist, wobei der Extruder (26) auf einer Basisplattform (66) montiert ist, die mit dem Rahmen (22) gekuppelt, aber an der Außenseite des Rahmens (22) positioniert ist.

6. Weichmachereinheit-Unteranordnung (20) gemäß Anspruch 1, bei welcher der Extruder (26) ein Doppelschnekkenextruder (26) ist.

7. Weichmachereinheit-Unteranordnung (20) gemäß Anspruch 1, bei welcher der bewegbare Einspritzeinheitwagen (34) und der bewegbare Extruderwagen (74) zusammengekuppelt sind.


## Revendications

1. Sous-ensemble d'unité de plastification (20) comprenant :

une extrudeuse (26) pour produire, à l'usage, un mélange homogène, l'extrudeuse (26) comprenant une goulotte d'alimentation (94) pour recevoir des fibres destinées à être mélangées dans le mélange ;
une unité d'injection (24) comprenant, un ensemble de creuset de tirage (24) ; et
un canal de transfert (56) couplant l'extrudeuse (26) à l'ensemble de creuset de tirage (24),
l'extrudeuse (26) et l'ensemble de creuset de tirage (24) étant latéralement décalés l'un par rapport à l'autre ;
un ensemble d'unité de chariot mobile (34), dans laquelle l'unité d'injection (24) est montée sur l'ensemble d'unité de chariot (34) ;
un chariot d'extrudeuse mobile (74) sur lequel est monté l'extrudeuse (26), dans laquelle le chariot d'extrudeuse (74) peut tourner par rapport au chariot d'unité d'injection (34) ; et
**caractérisé en ce que** le chariot d'extrudeuse mobile (74) est incliné par rapport à un plan horizontal.

2. Sous-ensemble d'unité de plastification (20) selon la revendication 1, comprenant en outre un châssis (22) sur lequel l'ensemble de creuset de tirage (24) est monté, le châssis (22) ayant un axe principal qui, à l'usage, est aligné de manière sensiblement parallèle à une unité de serrage, dans lequel l'ensemble de creuset de tirage (24) est aligné avec l'axe principal.

3. Sous-ensemble d'unité de plastification (20) selon la revendication 1, dans lequel le canal de transfert (56) a une première extrémité couplée à l'extrudeuse (26) et une deuxième extrémité, le sous-ensemble d'unité de plastification (20) comprend en outre :

une soupape à plusieurs positions (50) couplée à l'ensemble de creuset de tirage (24) et également à la deuxième extrémité du canal de transfert (56), dans lequel le canal de transfert (56) monte sensiblement vers le haut à partir de la soupape à plusieurs positions (50).

**4.** Sous-ensemble d'unité de plastification (20) selon la revendication 1, dans lequel le canal de transfert (56) a une première extrémité couplée à l'extrudeuse (26) et une deuxième extrémité, le sous-ensemble d'unité de plastification (20) comprenant en outre :

une soupape à plusieurs positions (50) couplée à l'ensemble de creuset de tirage (24) et la deuxième extrémité du canal de transfert (56), dans laquelle le canal de transfert (56) s'étend sensiblement latéralement à partir de la soupape à plusieurs positions (50).

**5.** Sous-ensemble d'unité de plastification (20) selon la revendication 1, comprenant en outre un châssis (22) sur lequel l'ensemble de creuset de tirage (24) est monté, l'extrudeuse (26) étant montée sur une plateforme de base (66) couplée au châssis (22), mais positionnée à l'extérieur du châssis (22).

**6.** Sous-ensemble d'unité de plastification (20) selon la revendication 1, dans lequel l'extrudeuse (26) est une extrudeuse à double vis (26).

**7.** Sous-ensemble d'unité de plastification (20) selon la revendication 1, dans lequel l'unité de chariot d'unité d'injection mobile (34) et le chariot d'extrudeuse mobile (7) sont couplés ensemble.

FIG. 5

Quantity

Glass-fibre length

FIG. 8

Increasing Velocity

FIG. 1 (PRIOR ART)

EP 1 915 247 B1

**FIG. 2**

EP 1 915 247 B1

**FIG. 3**

EP 1 915 247 B1

FIG. 4

FIG. 7

FIG. 6

**REFERENCES CITED IN THE DESCRIPTION**

**Patent documents cited in the description**

- EP 0747196 B
- US 3169275 A
- EP 0538286 B, Putsch
- US 20010005062 A, Klaus and Steffens
- US 20010048181 A